# EUROPEAN PATENT SPECIFICATION

(11) **EP 2 767 699 B1**
(45) Date of publication and mention of the grant of the patent: **18.04.2018**
(21) Application number: 13155774.6
(22) Date of filing: 19.02.2013
(51) Int. Cl.: F02C 7/22, B01D 53/00, F02C 9/40, F23K 5/00, F23R 3/36

(54) **Gas turbine with fuel composition control and method**
Gasturbine mit Brennstoffzusammensetzungssteuerung und Betriebsverfahren
Turbine à gaz avec commande de composition de carburant et procédé de fonctionnement

(43) Date of publication of application: 20.08.2014
(73) Proprietor: Ansaldo Energia IP UK Limited, London W1G 9DQ (GB)
(72) Inventor: Gassner, Martin, 8057 Zuerich (CH); Bernero, Stefano, 5452 Oberrohrdorf (CH)
(74) Representative: Bernotti, Andrea

(56) References cited:
- US-A- 5 501 722
- US-A- 6 161 386
- US-A1- 2005 126 178

## Description

### Technical field

The disclosure refers to a method for operating a gas turbine with active measures to condition the fuel composition as well as such a gas turbine.

### Background of the disclosure

Due to increased power generation by unsteady renewable sources like wind or solar existing gas turbine based power plants are increasingly used to balance power demand and to stabilize the grid. Thus improved operational flexibility is required. This implies that gas turbines are often operated at lower load than the base load design point, i.e. at lower combustor inlet and firing temperatures. Below certain limits, this reduces flame stability and burnout, with higher risk of flame loss (lean blow-off), increased pulsation (e.g. low frequency pulsation as lean blow-off precursor), and increased CO emissions

At the same time, emission limit values and overall emission permits are becoming more stringent, so that it is required to operate at lower emission values, keep low emissions also at part load operation and during transients, as these also count for cumulative emission limits.

State-of-the-art combustion systems are designed to cope with a certain variability in operating conditions, e.g. by adjusting the compressor inlet mass flow or controlling the fuel split among different burners, fuel stages or combustors. However, this is not sufficient to meet the new requirements, especially for already installed engines.

High fuel reactivity is known to have a beneficial effect towards flame stability and burnout, which is advantageous at low load operation but might be detrimental at higher load and higher firing temperatures, where it might cause flashback, overheating, and increased NOx emissions. Fuel reactivity is given by the composition of the natural gas provided by the supply grid or other gas sources. With new and diverse gas sources being exploited, the fuel composition in the grid is often fluctuating. Often large amounts of inert gases can be present. The amount of C2+ (i.e. higher hydrocarbons that contain more than one carbon atom per molecule and have a higher reactivity than methane) can fluctuate for example between 0% and 20% or more, which causes the reactivity of the fuel to fluctuate in an uncontrolled way beyond the stability limits of current burners.

Low fuel reactivity has driven the development of ideas and solutions aiming to increase fuel reactivity. These are based on methane reforming technologies, such as steam reforming, catalytic partial oxidation, non-catalytic partial oxidation, autothermal reforming, and plasma reforming. They all aim at providing hydrogen to increase the reactivity of the fuel. Reforming technologies to condition fuel by extracting at least part of it, processing it through a reformer, and then feeding it to the combustion system are described for example in US20100300110A1 and EP2206968A2. For solutions based on fuel reforming the integration effort into the power plant is high, which limits operational flexibility and applicability to existing plants. Also, some of these solutions include heat exchangers and therefore have big thermal inertia, require a long start-up time and cannot respond sufficiently fast in case the gas turbine is changing due to dispatch requests or grid support requests.

US20050126178A1 discloses a method for operating a gas turbine using a first fuel at full load. An improved emission behavior is achieved by operating the gas turbine at partial load with a second fuel, which has a richer mix of higher-value hydrocarbons (C2+) with two and more carbon atoms per molecule like ethane (C2H6) and propane (C3H8).

### Summary of the disclosure

The object of the present disclosure is to propose a gas turbine and a method for operating a gas turbine, which enables stable, safe, and clean operation over a wide operating range. Further it enables the operation with fuel gas, which has large fluctuations in its composition. The invention concerns a gas turbine as defined in claim 1. According to an embodiment the gas turbine is a sequential combustion gas turbine, as defined in claim 2. In a further embodiment the gas turbine power plant comprises a fuel storage system for accumulating and storing at least part of the first fuel fraction, and later use of the first fuel fraction. The first fuel fraction can be accumulated and stored during a first operating period. At least part of the stored first fuel fraction can be released and feed to at least one combustor during a second operating period to control the combustion behaviour.

Problems related to combustion stability and emission at low gas turbine load can be mitigated with such a gas turbine. The separated gas, which is rich in high hydrocarbons (C2+), can be temporarily stored on-site, and can be used to enrich the fuel from the natural gas source (typically a gas grid) during operating modes when high reactivity is needed to increase combustion stability and CO emissions (i.e. at low load, typically below 50% relative load, i.e. power output relative to base load power output). The enrichment can be done to the entire fuel, or only for the second combustor in case of a reheat engine where it is expected to be particularly beneficial. The fuel management system does not need thermal integration with the gas turbine or associated bottoming cycle and can be operated in fast response to gas turbine load variation requests. Furthermore, the solution only requires minor modifications (i.e. some additional connections) to the fuel supply system, but does not affect the hardware and control system of the gas turbine itself. These features are particularly favourable for retrofit to existing plants, as the integration effort and issues are reduced.

The storage system can simply comprise a storage vessel, which is operated at or below the outlet pressure of the separating system.

According to one embodiment the storage system comprises a storage vessel, and a compressor for compressing the first fuel fraction to reduce the required storage volume.

In a further refinement the storage system comprises a storage vessel, a compressor for compressing the first fuel fraction to reduce the required storage volume for storage. It further comprises a turbine to recover part of the energy, which was needed to compress the first fuel fraction during the accumulation process, when expending the stored first fuel fraction for feeding it to a combustor. These systems can further comprise a cooler for cooling the compressed gas and/or a compressor arrangement with intercooling.

In another embodiment the storage system comprises a liquefaction system and a liquid fuel storage vessel as well as a regasification system to reduce the required storage volume for storage.

The gas separation system can for example comprises a permeative separation membrane, an absorptive separation system, an adsoprtive separation system, a pressure or temperature swing adsorption (PSA/TSA) system, or a cryogenic separation system.

Suitable systems apply single- or multi-stage membrane processes. Solutions in which the bulk part of the standard fuel does not suffer major pressure loss are preferable in order to minimize recompression needs. In case of a membrane system, materials in which higher hydrocarbons permeate faster than methane are thus preferable. In adsorption systems, this corresponds to materials to which higher hydrocarbons adhere better than methane. For resorption and for cryogenic separation waste heat of the gas turbine or a combined cycle process can be used.

The use, respectively storage or release of the first fuel fraction can be determined based on a schedule, which depends for example on the gas turbine load, the position of a variable inlet guide vane or another suitable operating parameter of the gas turbine.

According to an embodiment the flow of the first fuel fraction, which is fed to the combustor(s), is controlled depending on at least one gas turbine operating parameter. For this control the gas turbine comprises a corresponding measurement device. This can be a measurement device to determine at least one of: the incoming fuel gas mass flow, the gas turbine load, a gas turbine operating temperature, the composition of the incoming fuel gas, the composition of the separated first fuel fraction, the composition of the second fuel fraction, the CO emissions, the NOₓ emissions, the lean blow off limit, the low frequency pulsation, or the flame (i.e. flame monitoring).

Besides the gas turbine a method for operating such a gas turbine is defined in claim 7. The first fuel fraction can be fed to the same combustor as the incoming fuel gas and/or the second fuel fraction or it can be feed as the only fuel to a combustor to provide a stabilizing flame. This combustor can be operated in a premixed mode but act as a stabilizer for other burners or combustors of the gas turbine like a conventional pilot flame.

Depending on the fuel gas composition the separation of high hydrocarbon content fuel gas does not need to be carried out at all times. It can be carried out depending on the fuel gas composition and the gas turbine operation conditions, in particular as a function of gas turbine load.

Typically the injection of first fuel fraction with high hydrocarbon content fuel does not need to be carried out at all times. It can be carried out depending on the fuel gas composition and the gas turbine operation conditions, in particular as a function of gas turbine load.

According to one embodiment of the method all or at least part of the first fuel fraction is stored in a storage system during a first operating period and at least part of the stored first fuel fraction is fed to the at least one combustor to control the combustion behaviour during a second operating period. The first and second operating period can for example depend on an operational parameter of the gas turbine.

The first period can for example be a period when a low reactivity fuel gas is desired, e.g. at base load operation or high part load operation. High part load is typically a load above 60% relative load, preferably above 70% relative load; where relative load is the load relative to the base load, which is the design load that can be generated by the gas turbine at the respective ambient conditions (ambient conditions are for example the temperature, pressure, and humidity).

Low reactivity gas can for example be desired to reduce a flash back risk at high operating temperatures of the combustor.

The second period can for example be a period when a high reactivity fuel gas is desired, e.g. at part base load operation, low part load operation (also called low load operation) or idle operation. Low part load is typically a load below 60% relative load, and can be below 30% relative load.

High reactivity fuel gas can be used to increase combustion stability and reduce CO emission when the combustor is operating at a low operating temperature.

A low operating temperature is an operating temperature, which is below the design operating temperature of the combustor. It can for example be more than 20 K or more than 50 K below the absolute base load operating temperature. A high operating temperature is an operating temperature, which is close to the design operating temperature of the combustor, e.g. within for example 20 K or within 50 K of the design operating temperature of the combustor.

According to a further embodiment the first fuel fraction is admixed to the incoming fuel gas and/or the second fuel fraction or directly fed into the combustor to control one or more operating parameters of the gas turbine.

These can be one or more of the following parameters: the CO emission, the NOₓ emission, local overheating and / or flashback risk, combustor pulsations due to flame instability and or lean blow-off, or the minimum load.

The CO emissions can be reduced by increasing the first fuel fraction while keeping the total heat input unchanged.

The NOₓ emissions can be reduced by reducing the ratio of the first fuel to the second fuel fraction. They can be further reduced by reducing the ratio of incoming fuel flow admitted to the combustor to the second fuel fraction.

The operation range can be expanded to lower load by adding or increasing the addition of the first fuel fraction. This enables lower load operation and thereby reduces the minimum fuel consumption. This is especially helpful to reduce operating costs at low load demand of the grid, when the gas turbine is "parked" or in a standby mode.

According an embodiment for the operation of a sequential combustion gas turbine, which comprises a compressor, a first combustor, a first turbine, a second combustor and a second turbine a fuel gas comprising the first fuel fraction can be added into either only the first combustor or only the second combustor or both the first combustor, and the second combustor.

According to a further embodiment of the method the first fuel fraction is added into only the first combustor to increase the flame stability at low load when the second combustor is not in operation.

In a further embodiment for an operating mode, in which the first and second combustors are in operation, the first fuel fraction is added into only the second combustor to increase the flame stability. This addition at low load of the second combustor reduces CO emission due to low temperatures because of the high reactivity of the added high hydrocarbons.

In yet a further embodiment the first fuel fraction is added into only the first combustor while only fuel of the second fuel fraction is used to operate the second combustor to reduce the flash back risk in the second combustor. This operating method is advantageous at base load or high part load. The first combustor can be supplied with fuel of the first fuel fraction or a combination of first fuel fraction and second fuel fraction, or of first fuel fraction and incoming fuel.

According to a refined embodiment for a stable combustor operation the first fuel fraction is only added to some burners of a combustor or only part of the fuel nozzles of a burner.

According to an embodiment the first fuel fraction added to the fuel flow of a burner is controlled as a function of at least one operating parameter of the gas turbine. Suitable control parameters can be the fuel mass flow injected into the gas turbine, the gas turbine load, the relative gas turbine load, the composition of the incoming fuel gas, the composition of the first fuel fraction and/or the second fuel fraction. These parameters have a direct influence on the thermal load of the gas turbine and are an indication of the heat release in the combustors. A further suitable control parameter can be a gas turbine operating temperature, such as the turbine inlet temperature, the turbine exit temperature or local temperature indicative of the combustion process. In particular temperatures, which directly or indirectly indicate the flame position, such as a burner or combustor metal temperature or the temperature of a recirculation flow in a combustion chamber can be used to control the mass flow of first fuel fraction.

Since emissions give an indication of the combustion condition the CO emissions, the NOx emissions, or unburned hydrocarbon content (also called UHC) can be used to control the mass flow of first fuel fraction.

Any other control signal indicative of an approach to a lean blow off limit or indicative of a flashback risk can also be used to control the mass flow of first fuel fraction. Among others this can be the low frequency pulsations or a flame monitor signal (typically an optical sensor).

Different technologies and methods are known for separation of high hydrocarbons. Suitable methods for separating the first fuel fraction comprise permeative separation methods using membranes, absorptive and adsorptive separation methods, in particular a pressure or temperature swing adsorption (PSA/TSA) method, and cryogenic separation methods.

According to one embodiment for a method, in which an incoming fuel with more than 50% methane is supplied, the first fuel fraction is separated by a permeative separation method using a membrane, which is permeative to the high hydrocarbons and allows the methane rich main fuel flow to pass on to the second fuel fraction. In a method, in which the first fuel fraction permeates the membrane, the main fuel flow can flow through the gas separation with a low pressure drop. In particular the pressure drop of the main fuel flow is smaller than the pressure drop of the membrane.

Multi stage membrane processes can be applied, depending on the type of membrane, fuel gas composition and required purities of the first and second fuel fraction.

According to another embodiment for a method, in which an incoming fuel with more than 50% methane is supplied, the first fuel fraction is separated by adsorptive separation method, in which the adsorbent is selective to the high hydrocarbons and allows the methane rich main fuel flow to pass on to second fuel fraction. Thus the pressure drop of the second fuel fraction is small. Typically this kind of adsorption process requires less energy for regenerating the adsorbent, i.e. desorption and release of the first fuel fraction than a process in which methane is adsorbed, because the mass flow of the first fuel fraction is smaller than the mass flow of methane.

By reducing combustion stability issues and emissions, GT operation is allowed at lower load than without application of this solution, which reduces operation costs (i.e. fuel costs) when electricity price is low. In addition, derating of the engine for operation with high hydrocarbon fuels (C2+) during base load operation will become obsolete since the high hydrocarbons (C2+) can be removed from the fuel. This increases both the power output and the efficiency of the gas turbine when maximum power is requested, and thus also the profit when the electricity price is high. Both these aspects can be expected to more than outweigh for example the required electricity to recompress separated high hydrocarbons for storage, which is estimated as marginal in comparison to the obtained economic benefits. If some thermal integration with the plant is acceptable, it is furthermore possible to recover part of the electricity required for compression when the high hydrocarbons stored at high pressure is preheated and expanded in a turbine to the fuel pressure required for injection into the combustor(s). The economics of plant operation is therefore improved both at low and base load operation.

### Brief description of the drawings

The disclosure, its nature as well as its advantages, shall be described in more detail below with the aid of the accompanying drawings. Referring to the drawings:
Fig. 1 schematically shows an example of a gas turbine plant with a fuel system according to the present disclosure,
Fig. 2 schematically shows an example of a sequential combustion gas turbine plant with a fuel system according to the present disclosure,
Fig. 3 schematically shows a second example of a sequential combustion gas plant turbine with a fuel system which does not form part of the present invention.
Fig. 4a, b, c, and d schematically show different fuel storage systems.

### Embodiments of the disclosure

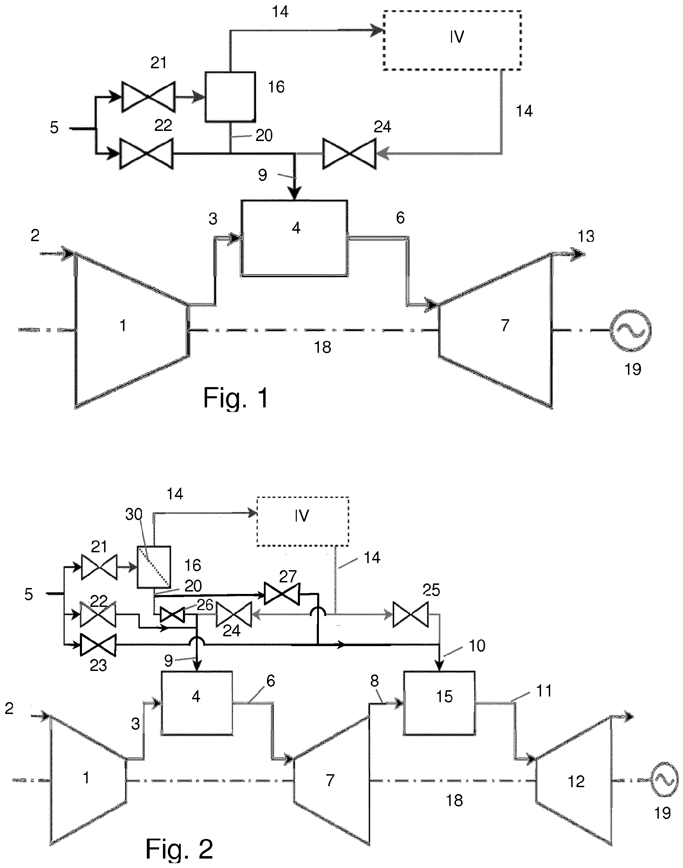

Fig. 1 shows a gas turbine plant with a single combustor gas turbine for implementing the method according to the disclosure. It comprises a compressor 1, a combustor 4, and a turbine 7. Fuel gas is introduced into the combustor 4, mixed with compressed air 3 which is compressed in the compressor 1, and combusted in the combustor 4. The hot gases 6 are expanded in the subsequent turbine 7, performing work.

Typically, the gas turbine plant includes a generator 19, which is coupled to a shaft 18 of the gas turbine.

An incoming fuel 5 can be controlled by a first combustor fuel control valve 22 and fed to the combustor 4. Alternatively or in combination at least part of the incoming fuel 5 flow is controlled by a fuel conditioner control valve 21. The fuel flow passing the fuel conditioner control valve 21 passes through a gas separation 16 in which a first fuel fraction 14 with high hydrocarbons, which has a higher concentration of high hydrocarbons than an incoming fuel gas 5, is separated from the incoming fuel 5. A remaining second fuel fraction 20 with a reduced concentration of high hydrocarbons, which has a lower concentration of high hydrocarbons than the incoming fuel gas 5, can be fed to the combustor 5. A mixture of the incoming fuel 5 and the second fuel fraction 20 is fed to the combustor 4. Depending on the operating conditions and the gas turbine configuration the first fuel fraction 14 is also fed to the combustor 4. In the example shown in Fig. 1 the first fuel fraction 14 is first fed into a storage system IV. From this storage system IV it can be fed into the combustor 4. The fuel flow of the first fuel fraction 14 into the combustor 4 is controlled by a first control valve for high hydrocarbon fuel 24. In the example shown the second fuel fraction 20 is mixed with the incoming fuel 5 and the first fuel fraction 14, resulting in a first conditioned fuel flow 9. Fig. 2 schematically shows a gas turbine plant with a sequential combustion gas turbine for implementing the method according to the disclosure. It comprises a compressor 1, a first combustor 4, a first turbine 7, a second combustor 15 and a second turbine 12. Typically, it includes a generator 19 which is coupled to a shaft 18 of the gas turbine.

Fuel gas is supplied to the first combustor 4, mixed with air which is compressed in the compressor 1, and combusted. The hot gases 6 are partially expanded in the subsequent first turbine 7, performing work. As soon as the second combustor is in operation, additional fuel is added to the partially expanded gases 8 and combusted in the second combustor 15. The hot gases 11 are expanded in the subsequent second turbine 12, performing work.

An incoming fuel 5 can be controlled by a first combustor fuel control valve 22 and fed to the first combustor 4. The incoming fuel 5 can also be controlled by a second combustor fuel control valve 23 and fed to the second combustor 15. Alternatively or in combination at least part of the incoming fuel 5 flow is controlled by a fuel conditioner control valve 21. The fuel flow passing the fuel conditioner control valve 21 passes through a gas separation 16 in which a first fuel fraction 14 with high hydrocarbons, which has a higher concentration of high hydrocarbons than an incoming fuel gas 5, is separated from the incoming fuel 5. A remaining second fuel fraction 20 with a reduced concentration of high hydrocarbons, which has a lower concentration of high hydrocarbons than the incoming fuel gas 5, is fed to at least the first combustor 4. A mixture of the incoming fuel 5 and the second fuel fraction 20 is fed to the first combustor. The incoming fuel 5, the second fuel fraction 20 or a mixture of both is fed to the second combustor 15. In the example shown here the gas separation 16 comprises a membrane 30 to separate high hydrocarbon fuel from the main fuel flow.

The flow of the second fuel fraction 20, i.e. the fuel fraction with reduced hydrocarbon content also called low hydrocarbon fuel or low C2+ fuel, to the first combustor 4 can be controlled by a first low hydrocarbon fuel control valve 26.

The flow of the second fuel fraction 20, to the second combustor 15 can be controlled by a second low hydrocarbon fuel control valve 27.

To reduce the flash back risk in the second combustor 15 the second combustor fuel control valve 23 can be closed and only the second fuel fraction can be used for combustion in second combustor 15. The flow of the low hydrocarbon fuel to the second combustor can be controlled by the second low hydrocarbon control valve 27. Advantageously the first fuel fraction 14 can be fed into a storage system IV. From this storage system IV it can be feed into the combustor 4, 15. The fuel flow of the first fuel fraction 14 into the first combustor 4 is controlled by a first control valve for high hydrocarbon fuel 24. The fuel flow of the first fuel fraction 14 into the second combustor 15 is controlled by a second control valve for high hydrocarbon fuel 25.

In the example shown the first fuel fraction 14 is mixed with the incoming fuel 5 and the second fuel fraction 20, resulting in a first conditioned fuel flow 9 for the first combustor 4 and resulting in a second conditioned fuel flow 10 for the second combustor 15. Depending on the burner type each fuel flow, i.e. the incoming fuel 5 and/or the second fuel fraction 20 and the first fuel fraction 14 can also be directly injected into the second combustor 15 (not shown).

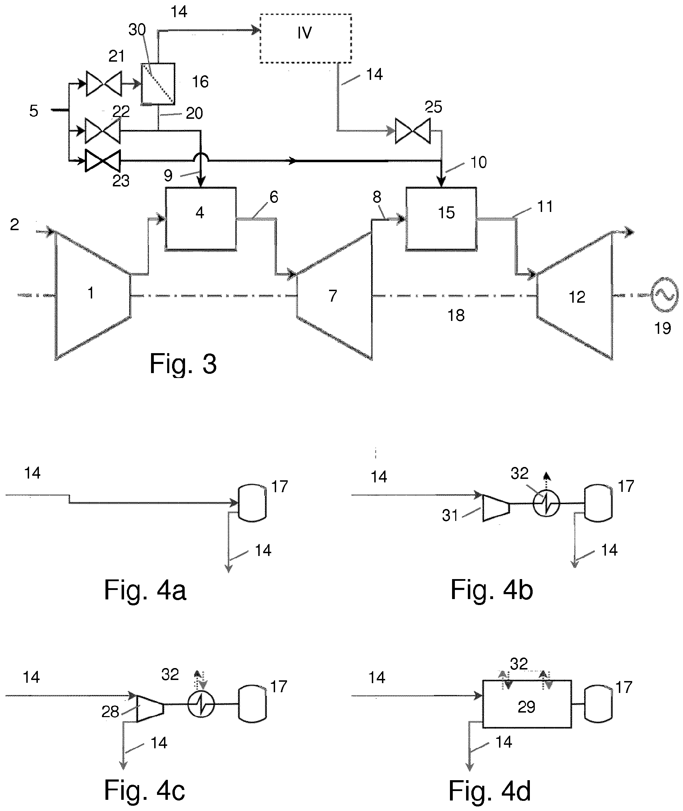

Fig. 3 schematically shows a second example of a plant with a sequential combustion gas turbine with a fuel system which does not form part of the present invention. Fig. 3 is based on Fig. 2. However, the fuel distribution system is simplified. The example of Fig. 3 is intended for a gas turbine operation without flash back risk in the second gas turbine 12. Therefore, no line to feed the second fuel fraction 20 with low hydrocarbon content fuel into the second combustor 15 is provided. The second combustor can only be supplied with incoming fuel 5 via the second combustor fuel control valve. Additionally, the first fuel fraction 14 with high hydrocarbon content can be fed into the second combustor 15 via the 25 second control valve for high hydrocarbon fuel.

In this example the output capacity of the gas separation 16 is limited to the base load fuel flow of the first combustor 4. Only incoming fuel 5 can be fed into the first combustor 4 via the first combustor fuel control valve 22 and/or the second fuel fraction 20 can be fed into the first combustor 4. The second fuel fraction 20 can be controlled by the fuel conditioner control valve 21. No admixture of the first fuel fraction 14 into the first combustor 4 is possible in this configuration.

For all examples oil can also be injected into the combustor in a dual fuel configuration (not shown). The gas turbine can also be used as a mechanical drive, for example for a compressor station.

The exhaust gases 13 of the gas turbine can be beneficially fed to a waste heat recovery boiler of a combined cycle power plant or to another waste heat recovery application (not shown).

Fig. 4a shows a simple fuel storage system IV comprising a storage vessel 17, a pipe for feeding the first fuel fraction 14 into storage vessel 17, and a pipe for feeding the first fuel fraction 14 from the storage vessel 17 to one or both combustors 4, 15.

This system can be used if only a small amount of high hydrocarbon fuel is required to assure a stable operation of the gas turbine, e.g. if the operating time is limited for example to loading and unloading of the plant or if the time is limited to a certain time period. This time period can be for example in the order of up to 1 hour, or up to 5 hours. Further, a high fuel gas supply pressure is advantageous for such a system to assure that the pressure in the storage vessel 17 will be higher than the pressure required to feed the first fuel fraction into the first combustor 4 , respectively the second combustor 15.

Fig. 4b shows a more refined example. To increase the storage capacity the first fuel gas fraction 14 is compressed in a compressor 31 before storing it in the storage vessel 17. To further reduce the volume requirements the compressed fuel gas is cooled in a heat exchanger 32 before admittance into the storage vessel 17.

Fig. 4c shows a further refined example. To increase the storage capacity the first fuel gas fraction 14 is compressed in a compressor 28 before storing it in the storage vessel 17. To further reduce the volume the compressed gas is cooled in a heat exchanger 32.

Power required for compression of the first fuel gas fraction 14 can be at least partly recovered by expanding the first fuel gas fraction 14 when it is released from the storage vessel 17. In the example of Fig. 4c the compressor 28 is designed to also operate as a turbine 28 if the flow is reversed. When operating as a turbine 28 the first fuel gas fraction 14 can be preheated with waste heat or low grade heat from the plant in the heat exchanger 32 to increase the power recovered in the turbine 28. This example only allows intermitted operation of the fuel conditioning system: Either high hydrocarbon content fuel gas is separated in the gas separation 16 and the resulting first fuel fraction 14 is fed via the compressor 28 into the storage vessel 17, or high hydrocarbon content fuel gas is released from the storage vessel 17, expended in the turbine 28 and admitted into the first and or second combustor 4, 15.

For continuous operation an arrangement with a separate compressor for feeding the storage vessel 17 and a separate turbine arranged in the branch leaving the storage vessel 17 can be used (not shown).

The compressor 31, 28 of Fig. 4b, and c can be configured as a compressor with intercooler to reduce the power requirement.

Fig. 4d schematically shows a different fuel storage system IV. The system shown here is based on a liquefaction and regasification system 29. To increase the storage capacity the first fuel fraction 14 is liquefied in the liquefaction and regasification system 29 before storing it as liquid gas in the storage vessel 17. For liquefaction heat is withdrawn from the first fuel fraction 14 by heat exchanger 32. To feed the first fuel fraction 14 into the combustor 4, 15 it is re-gasified in the liquefaction and regasification system 29. For regasification heat is added in heat exchanger 32.

This example only allows intermitted operation of the fuel conditioning system: Either natural gas is separated in the gas separation 16 and the resulting first fuel 14 fraction with high hydrocarbon content is fed via the liquefaction and regasification system 29 into the storage vessel 17, or high hydrocarbon content fuel gas is released from the storage vessel 17, re-gasified in the liquefaction and regasification system 29 and admitted into the first and or second combustor 4, 15.

All the explained advantages are not limited just to the specified combinations but can also be used in other combinations or alone without departing from the scope of the disclosure, as defined in the appended claims. Other possibilities are optionally conceivable, for example, for deactivating individual burners or groups of burners.

Further, it can be advantageous to operate the gas separation 16 with a higher fuel flow than required by the gas turbine operation. This can be advantageous for the performance of the separation system 16, i.e. purity of the separated high hydrocarbons and the system complexity. When the fuel flow through the gas separation 16 is higher than the fuel required for the gas turbine operation the excess second fuel fraction 20, which contains mainly methane, is re-injected into the gas grid. This can for example be accomplished via a return line with a fuel gas compressor and control valve (not shown).

### List of designations

- 1: Compressor
- 2: Intake air
- 3: Compressed air
- 4: First combustor
- 5: Incoming fuel
- 6: Hot gases
- 7: First turbine
- 8: Partially expanded hot gases
- 9: First conditioned fuel
- 10: Second conditioned fuel
- 11: Hot gases
- 12: Second turbine
- 13: Exhaust gases (for the waste heat recovery boiler)
- 14: First fuel fraction
- 15: Second combustor
- 16: Gas separation
- 17: Storage vessel
- 18: Shaft
- 19: Generator
- 20: Second fuel fraction
- 21: Fuel conditioner control valve
- 22: First combustor fuel control valve
- 23: Second combustor fuel control valve
- 24: First control valve for high hydrocarbon fuel
- 25: Second control valve for high hydrocarbon fuel
- 26: First low hydrocarbon fuel control valve
- 27: Second low hydrocarbon fuel control valve
- 28: Compressor/Turbine
- 29: Liquefaction/regasification
- 30: Membrane
- 31: Compressor
- 32: Heat exchanger

- IV: Storage

## Claims

1. A gas turbine with at least a compressor (1), a combustor (4, 15), a turbine (7, 12), and a fuel system,
the fuel system comprises a gas separation system (16), for separating at least a first fuel fraction (14) with high hydrocarbons, which has a higher concentration of high hydrocarbons than an incoming fuel gas (5), thereby providing a remaining second fuel fraction (20) with a reduced concentration of high hydrocarbons, which has a lower concentration of high hydrocarbons than the incoming fuel gas (5), wherein a fuel line for feeding the first fuel fraction (14) leads to the combustor (4, 15) to control the combustion behaviour by controlled addition of the first fuel fraction (14) into the combustor (4,15), **characterized in that** a mixture of the incoming fuel gas (5) and the second fuel fraction (20) is fed into the combustor (4,15).

2. The gas turbine according to claim 1, **characterized in that** the gas turbine is a sequential combustion gas turbine comprising the compressor (1), a first combustor (4), a first turbine (7), a second combustor (15) and a second turbine (12),
and **in that** the mixture of the incoming fuel gas (5) and the second fuel fraction (20) leads to the first combustor (4) of the gas turbine for feeding fuel gas (5, 20) into the first combustor (4) and a fuel gas supply line for incoming fuel (5) and/or a fuel line for the second fuel fraction (20) leads to the second combustor (15) of the gas turbine for feeding fuel gas (5, 20) into the second combustor (15) and a fuel line for feeding the first fuel fraction (14) leads to the first combustor (4) to control the combustion behaviour by addition of first fuel fraction (14) and a fuel line for feeding the first fuel fraction (14) leads to the second combustor (15) to control the combustion behaviour by addition of first fuel fraction (14).

3. The gas turbine according to claim 1 or 2, **characterized in that** it comprises a fuel storage system (IV) for accumulating and storing at least part of the first fuel fraction (14) during a first operating period and releasing at least part of the stored first fuel fraction (14) to feed the first fuel fraction (14) to at least one combustor (4, 15) during a second operating period to control the combustion behaviour.

4. The gas turbine according to claim 3, **characterized in that** the storage system (IV) comprises a storage vessel (17), and a compressor (31) for compressing the first fuel fraction (14) to reduce the required storage volume or
**in that** the storage system (IV) comprises a storage vessel (17), a compressor (28, 31) for compressing the first fuel fraction (14) to reduce the required storage volume for storage, and a turbine (28) for expansion of stored first fuel fraction (14) to recover energy, when feeding the first fuel fraction (14) to a combustor (4, 15), or **in that** the storage system (IV) comprises a liquid fuel storage vessel (17), and a liquefaction and regasification system (29) to reduce the required storage volume for storage.

5. The gas turbine according to one of the claims 1 to 4, **characterized in that** separation system (16) comprises one of
- a permeative separation membrane,
- an adsorptive separation system,
- an absorptive separation system,
- a pressure or temperature swing adsorption (PSA/TSA) system,
- a cryogenic separation system.

6. The gas turbine according to one of the claims 1 to 5, **characterized in that** it comprises measurement devices to determine at least one of
- the incoming fuel gas (5) mass flow,
- the gas turbine load,
- a gas turbine operating temperature,
- the composition of the incoming fuel gas (5),
- the composition of the separated first fuel fraction (14)
- the composition of the separated second fuel (20),
- the CO emissions,
- the NOx emissions,
- the lean blow off limit,
- the low frequency pulsation,
- the flame in the combustor (4, 15).

7. Method for operating a gas turbine with at least a compressor (1), a combustor (4, 15), a turbine (7, 12), and a fuel system, wherein a first fuel fraction (14) with an increased concentration of high hydrocarbons, which has a higher concentration of high hydrocarbons than the incoming fuel gas (5), is separated from the incoming fuel gas (5) thereby providing a remaining second fuel fraction (20) with a reduced concentration of high hydrocarbons, which has a lower concentration of high hydrocarbons than the incoming fuel gas (5), wherein a fuel gas flow comprising the first fuel fraction (14) is fed to the at least one combustor (4, 15) to control the combustion behaviour, **characterized in that** a mixture of the incoming fuel gas (5) and the second fuel fraction (20) is fed to the at least one combustor (4, 15) of the gas turbine.

8. The method as claimed in claim 7, **characterized in that** all or at least part of the first fuel fraction (14) is stored in a storage system (IV) during a first operating period, and **in that** at least part of the stored first fuel fraction (14) is fed to the at least one combustor (4, 15) to control the combustion behaviour during a second operating period.

9. The method as claimed in one of claims 7 or 8, **characterized in that** the first fuel fraction (14) is admixed to the incoming fuel gas (5) and/or the second fuel fraction (20) or directly fed into the combustor (4, 15) to control one or more of the following parameters:
- the CO emission
- the NOx emission
- local overheating and / or flashback risk
- pulsations due to flame instability and or lean blow-off.

10. The method as claimed in one of claims 7 to 9, **characterized in that** in a sequential combustion gas turbine comprising a compressor (1), a first combustor (4), a first turbine (7), a second combustor (15) and a second turbine (12), the first fuel fraction (14) is added into the first combustor (4) and/or the second combustor (15).

11. The method as claimed in claim 10, **characterized in that** the first fuel fraction (14) is added only into the first combustor (4) to increase the flame stability at low load when the second combustor is not in operation, or
**in that** the first fuel fraction (14) is only added into the second combustor (15) to increase the flame stability at low load of the second combustor (15) to reduce CO emission due to low temperatures, or
**in that** the first fuel fraction (14) is added only into the first combustor (4) while only fuel of the second fuel fraction (20) is used to operate the second combustor (15) to reduce the flash back risk in the second combustor.

12. The method as claimed in one of claims 7 to 11, **characterized in** the first fuel fraction (14) is only added to some burners of a combustor or only some of the fuel nozzles of a burner.

13. The method as claimed in one of claims 7 to 12, **characterized in that** the amount of first fuel fraction (14) added to the fuel flow of a burner (4, 15) is controlled as a function of at least one of:
the total fuel gas mass flow injected into the gas turbine,
the gas turbine load or relative gas turbine load,
the composition of the incoming fuel gas (5),
the composition of the first fuel fraction (14),
the composition of the second fuel fraction (20),
a gas turbine operating temperature,
the CO emissions,
the unburned hydrocarbon content in the exhaust gas (13),
the NOx emissions,
the lean blow off limit of a combustor (4, 15),
the low frequency pulsation,
a flame monitoring signal,
a flashback risk.

14. The method as claimed in one of claims 7 to 12, **characterized in that** the first fuel fraction (14) is separated by at least one of the following methods:
- a permeative separation method using membranes (30),
- an adsorptive separation method,
- an absorptive separation method,
- a pressure or temperature swing adsorption (PSA/TSA) method,
- a cryogenic separation method.

15. The method as claimed in claim 14, **characterized in that** an incoming fuel with more than 50% methane is supplied,
and **in that** the first fuel fraction (14) is separated by a permeative separation method using a membrane which is permeative to high hydrocarbons and allows a methane rich main fuel flow to pass on as second fuel fraction (20) with a pressure drop which is smaller than the pressure drop of flow through the membrane (30),
or **in that** the first fuel fraction (14) is separated by adsorptive separation method in which the adsorbent is selective to the high hydrocarbons and allows the methane rich main fuel flow to pass on as a second fuel fraction (20).

## Patentansprüche

1. Gasturbine mit mindestens einem Verdichter (1), einer Brennkammer (4, 15), einer Turbine (7, 12) und einem Brennstoffsystem,
wobei das Brennstoffsystem ein Gastrennungssystem (16) zur Trennung mindestens einer ersten Brennstofffraktion (14) mit hohen Kohlenwasserstoffen umfasst, die eine höhere Konzentration von hohen Kohlenwasserstoffen aufweist als ein einströmendes Brenngas (5), wodurch eine restliche zweite Brennstofffraktion (20) mit einer geringeren Konzentration von hohen Kohlenwasserstoffen versorgt wird, die eine niedrigere Konzentration von hohen Kohlenwasserstoffen aufweist als das einströmende Brenngas (5),
wobei
eine Brenngasleitung zur Versorgung der ersten Brennstofffraktion (14) in die Brennkammer (4, 15) führt, so dass das Brennverhalten mittels kontrollierter Einleitung der ersten Brennstofffraktion (14) in die Brennkammer (4, 14) kontrolliert wird, **dadurch gekennzeichnet, dass** ein Gemisch aus dem einströmenden Brenngas (5) und der zweiten Brennstofffraktion (20) in die Brennkammer (4, 15) geleitet wird.

2. Gasturbine nach Anspruch 1, **dadurch gekennzeichnet, dass** die Gasturbine eine sequentielle Gasturbinenbrennkammer ist, welche den Verdichter (1), eine erste Brennkammer (4), eine erste Turbine (7), eine zweite Brennkammer (15) und eine zweite Turbine (12) umfasst und dass das Gemisch aus dem einströmenden Brenngas (5) und der zweiten Brennstofffraktion (20) in die erste Brennkammer (4) der Gasturbine geleitet wird, um die erste Brennkammer (4) und eine Brenngaszuführleitung für einströmendes Brenngas (5) mit Brenngas (5) zu versorgen, und/oder dass eine Brenngasleitung für die zweite Brennstofffraktion (20) in die zweite Brennkammer (15) der Gasturbine führt, um die zweite Brennkammer (15) mit Brenngas (5, 20) zu versorgen, wobei eine Brenngasleitung zur Zuführung der ersten Brennstofffraktion (14) in die erste Brennkammer (4) führt, um das Brennverhalten durch Einleitung der ersten Brennstofffraktion (14) zu kontrollieren,
und eine Brenngasleitung zur Zuführung der ersten Brennstofffraktion (14) in die zweite Brennkammer (15) führt, um das Brennverhalten durch Einleitung der ersten Brennstofffraktion (14) zu kontrollieren.

3. Gasturbine nach Anspruch 1 oder 2, **dadurch gekennzeichnet, dass** die Gasturbine ein Brennstoffspeichersystem (IV) zur Ansammlung und Speicherung mindestens eines Teils der ersten Brennstofffraktion (14) während eines ersten Betriebszeitraumes umfasst, wobei mindestens ein Teil der gespeicherten ersten Brennstofffraktion (14) freigegeben wird, der während eines zweiten Betriebszeitraumes zur Kontrolle des Brennverhaltens in mindestens eine Brennkammer (4, 15) geleitet wird.

4. Gasturbine nach Anspruch 3, **dadurch gekennzeichnet, dass** das Speichersystem (IV) einen Speicherbehälter (17) und einen Verdichter (31) zur Verdichtung der ersten Brennstofffraktion (14) umfasst, um das erforderliche Speichervolumen zu verringern, oder dass das Speichersystem (IV) einen Speicherbehälter (17), einen Verdichter (28, 31) zur Verdichtung der ersten Brennstofffraktion (14) zwecks Verringerung des zur Speicherung erforderlichen Speichervolumens, und eine Turbine (28) zur Ausdehnung der gespeicherten ersten Brennstofffraktion (14) zwecks Energierückgewinnung bei der Zuführung der ersten Brennstofffraktion (14) in eine Brennkammer (4, 15) umfasst, oder dass das Speichersystem (IV) einen Flüssiggas-Speicherbehälter (17) sowie ein Verflüssigungs- und Regasifizierungssystem (29) umfasst, um das für die Speicherung erforderliche Speichervolumen zu verringern.

5. Gasturbine nach einem der Ansprüche 1 bis 4, **dadurch gekennzeichnet, dass** das Trennungssystem (16) eines der folgenden System umfasst:
- eine permeative Trennmembran,
- ein adsorptives Trennsystem,
- ein absorbierendes Trennsystem,
- ein Druck- oder Temperaturwechsel-Adsorptionssystem (PSA/TSA),
- Kyrogen-Trennsystem.

6. Gasturbine nach einem der Ansprüche 1 bis 5, **dadurch gekennzeichnet, dass** die Gasturbine Messinstrumente umfasst, um mindestens einen der folgenden Werte zu bestimmen:
- den Massenfluss des einströmenden Brenngases (5),
- die Gasturbinenlast,
- eine Betriebstemperatur der Gasturbine,
- die Zusammensetzung des einströmenden Brenngases (5),
- die Zusammensetzung der getrennten ersten Brennstofffraktion (14),
- die Zusammensetzung der getrennten zweiten Brennstofffraktion (20),
- die CO-Emissionen,
- die NOx-Emissionen,
- die Magerverlöschgrenze,
- die niederfrequente Pulsation,
- die Flamme in der Brennkammer (4, 15).

7. Verfahren zum Betrieb einer Gasturbine mit mindestens einem Verdichter (1), einer Brennkammer (4, 15), einer Turbine (7, 12) und einem Brennstoffsystem, wobei eine erste Brennstofffraktion (14) mit einer erhöhten Konzentration von hohen Kohlenwasserstoffen, die eine höhere Konzentration von hohen Kohlenwasserstoffen aufweist als das einströmende Brenngas (5), von dem einströmenden Brenngas (5) getrennt wird, wodurch eine restliche zweite Brennstofffraktion (20) mit einer geringeren Konzentration von hohen Kohlenwasserstoffen versorgt wird, die eine niedrigere Konzentration von hohen Kohlenwasserstoffen aufweist als das einströmende Brenngas (5),
wobei in die mindestens eine Brennkammer (4) ein die erste Brennstofffraktion (14) enthaltender Brenngasstrom eingeleitet wird, um das Brennverhalten zu kontrollieren, **dadurch gekennzeichnet, dass** ein Gemisch aus dem einströmenden Brenngas (5) und der zweiten Brennstofffraktion (20) in die mindestens eine Brennkammer (4, 15) der Gasturbine geleitet wird.

8. Verfahren nach Anspruch 7, **dadurch gekennzeichnet, dass** die gesamte oder mindestens ein Teil der ersten Brennstofffraktion (14) während eines ersten Betriebszeitraumes in einem Speichersystem (IV) gespeichert wird und dass mindestens ein Teil der gespeicherten ersten Brennstofffraktion (14) in die mindestens eine Brennkammer (4, 15) geleitet wird, um das Brennverhalten während eines zweiten Betriebszeitraumes zu kontrollieren.

9. Verfahren nach einem der Ansprüche 7 oder 8, **dadurch gekennzeichnet, dass** die erste Brennstofffraktion (14) dem einströmenden Brenngas (5) und/oder der zweiten Brennstofffraktion (20) beigemischt oder direkt in die Brennkammer (4, 15) geleitet wird, um einen oder mehrere der folgenden Parameter zu kontrollieren:
- die CO-Emission,
- die NOx-Emission,
- die lokale Überhitzung und/oder das Flammenrückschlagrisiko,
- Pulsationen durch Flammeninstabilität oder Magerverlöschen.

10. Verfahren nach einem der Ansprüche 7 bis 9, **dadurch gekennzeichnet, dass** die erste Brennstofffraktion (14) in einer Gasturbine mit sequentieller Brennkammer mit einem Verdichter (1), einer ersten Brennkammer (4), einer ersten Turbine (7), einer zweiten Brennkammer (15) und einer zweiten Turbine (12) der ersten Brennkammer (4) und/oder der zweiten Brennkammer (15) zugeführt wird.

11. Verfahren nach Anspruch 10, **dadurch gekennzeichnet, dass** die erste Brennstofffraktion (14) nur der ersten Brennkammer (4) zugeführt wird, um die Flammenstabilität bei niedriger Last, wenn die zweite Brennkammer nicht in Betrieb ist, zu erhöhen, oder dass die erste Brennstofffraktion (14) nur der zweiten Brennkammer (15) zugeführt wird, um die Flammenstabilität bei niedriger Last der zweiten Brennkammer (15) zu erhöhen und die CO-Emission infolge niedriger Temperaturen zu verringern, oder dass die erste Brennstofffraktion (14) nur der ersten Brennkammer (4) zugeführt wird, wobei für den Betrieb der zweiten Brennkammer (15) nur Brennstoff der zweiten Brennstofffraktion (20) verwendet wird, um das Flammenrückschlagrisiko in der zweiten Brennkammer zu verringern.

12. Verfahren nach einem der Ansprüche 7 bis 11, **dadurch gekennzeichnet, dass** die erste Brennstofffraktion (14) nur einigen Brennern einer Brennkammer oder nur einigen der Brennstoffdüsen eines Brenners zugeführt wird.

13. Verfahren nach einem der Ansprüche 7 bis 12, **dadurch gekennzeichnet, dass** die dem Brennstoffstrom eines Brenners (4, 15) zugeführte Menge der ersten Brennstofffraktion (14) in Abhängigkeit mindestens eines der folgenden Parameter kontrolliert wird:
- dem Gesamtbrenngas-Massenstrom, der in die Gasturbine eingespritzt wird,
- der Gasturbinenlast oder der relativen Gasturbinenlast,
- der Zusammensetzung des einströmenden Brenngases (5),
- der Zusammensetzung der ersten Brennstofffraktion (14),
- die Zusammensetzung der getrennten zweiten Brennstofffraktion (20),
- einer Betriebstemperatur der Gasturbine,
- den CO-Emissionen,
- dem unverbrannten Kohlenwasserstoffanteil im Abgas (13),
- den NOx-Emissionen,
- der Magerverlöschgrenze einer Brennkammer (4, 15),
- der niederfrequenten Pulsation,
- einem Flammenüberwachungssignal,
- einem Flammenrückschlagrisiko.

14. Verfahren nach einem der Ansprüche 7 bis 12, **dadurch gekennzeichnet, dass** die erste Brennstofffraktion (14) mindestens mittels eines der folgenden Verfahren getrennt wird:
- eines permeativen Trennverfahren mittels Membranen,
- eines adsorptives Trennverfahrens,
- eines absorbierendes Trennverfahrens,
- eines Druck- oder Temperaturwechsel-Adsorptionsverfahrens (PSA/TSA),
- eines Kyrogen-Trennverfahrens.

15. Verfahren nach Anspruch 14, **dadurch gekennzeichnet, dass** ein einströmendes Brenngas mit über 50% Methan zugeführt wird und dass die erste Brennstofffraktion (14) durch ein permeatives Trennverfahren mittels Membran getrennt wird, das für hohe Kohlenwasserstoffe permeativ ist und es ermöglicht, dass ein methanreicher Hauptbrennstoffstrom als zweite Brennstofffraktion (20) mit einem Druckverlust weitergeleitet wird, der geringer ist als der Druckverlust des Stromes durch die Membran (30), oder dass die erste Brennstofffraktion (14) mittels eines adsorptiven Trennverfahrens getrennt wird, bei dem das Adsorbens für die hohen Kohlenwasserstoffe selektiv ist und es ermöglicht, dass der methanreiche Hauptbrennstoffstrom als zweite Brennstofffraktion (20) weitergeleitet wird.

## Revendications

1. Turbine à gaz comportant au moins un compresseur (1), une chambre de combustion (4, 15), une turbine (7, 12) et un circuit de combustible,
le circuit de combustible comprend un système de séparation des gaz (16), pour séparer au moins une première fraction de combustible (14) à hydrocarbures à forte viscosité, qui présente une concentration plus élevée en hydrocarbures à forte viscosité qu'un combustible gazeux entrant (5), fournissant ainsi une seconde fraction de combustible restante (20) à concentration réduite en hydrocarbures à forte viscosité, qui présente une concentration moins élevée en hydrocarbures à forte viscosité que le combustible gazeux entrant (5),
dans laquelle une conduite de combustible destinée à fournir la première fraction de combustible (14) conduit à la chambre de combustion (4, 15) afin de réguler le comportement de combustion par un ajout régulé de la première fraction de combustible (14) dans la chambre de combustion (4, 15),
**caractérisée en ce qu'**un mélange du combustible gazeux entrant (5) et de la seconde fraction de combustible (20) est fourni dans la chambre de combustion (4, 15).

2. Turbine à gaz selon la revendication 1, **caractérisée en ce que** la turbine à gaz est une turbine à gaz à combustion séquentielle comprenant le compresseur (1), une première chambre de combustion (4), une première turbine (7), une seconde chambre de combustion (15) et une seconde turbine (12),
et **en ce que** le mélange du combustible gazeux entrant (5) et de la seconde fraction de combustible (20) conduit à la première chambre de combustion (4) de la turbine à gaz pour fournir un combustible gazeux (5, 20) dans la première chambre de combustion (4) et une conduite d'arrivée de combustible gazeux pour un combustible entrant (5) et/ou une conduite de combustible pour la seconde fraction de combustible (20) conduit à la seconde chambre de combustion (15) de la turbine à gaz pour fournir un combustible gazeux (5, 20) dans la seconde chambre de combustion (15)
et une conduite de combustible destinée à fournir la première fraction de combustible (14) conduit à la première chambre de combustion (4) afin de réguler le comportement de combustion par ajout d'une première fraction de combustible (14)
et une conduite de combustible destinée à fournir la première fraction de combustible (14) conduit à la seconde chambre de combustion (15) afin de réguler le comportement de combustion par ajout d'une première fraction de combustible (14).

3. Turbine à gaz selon la revendication 1 ou 2, **caractérisée en ce qu'**elle comprend un système de stockage de combustible (IV) pour accumuler et stocker au moins une partie de la première fraction de combustible (14) pendant une première période de fonctionnement et libérer au moins une partie de la première fraction de combustible (14) stockée pour fournir la première fraction de combustible (14) dans au moins une chambre de combustion (4, 15) pendant une seconde période de fonctionnement afin de réguler le comportement de combustion.

4. Turbine à gaz selon la revendication 3, **caractérisée en ce que** le système de stockage (IV) comprend une cuve de stockage (17) et un compresseur (31) destiné à comprimer la première fraction de combustible (14) afin de réduire le volume de stockage nécessaire ou
**en ce que** le système de stockage (IV) comprend une cuve de stockage (17), un compresseur (28, 31) destiné à comprimer la première fraction de combustible (14) afin de réduire le volume de stockage nécessaire, et une turbine (28) pour permettre l'expansion de la première fraction de combustible (14) stockée afin de récupérer de l'énergie, lors de la fourniture de la première fraction de combustible (14) dans une chambre de combustion (4, 15), ou **en ce que** le système de stockage (IV) comprend une cuve de stockage de combustible liquide (17) et un système de liquéfaction et de regazéification (29) destiné à réduire le volume nécessaire pour le stockage.

5. Turbine à gaz selon l'une des revendications 1 à 4,
**caractérisée en ce que** le système de séparation (16) comprend l'un des éléments suivants :
- une membrane de séparation par perméation,
- une membrane de séparation par adsorption,
- un système de séparation par absorption,
- un système d'adsorption à oscillation de pression ou de température (PSA/TSA),
- un système de séparation cryogénique.

6. Turbine à gaz selon l'une des revendications 1 à 5,
**caractérisée en ce qu'**elle comprend des dispositifs de mesure permettant de déterminer au moins un des éléments suivants
- le débit massique du combustible gazeux entrant (5),
- la charge de la turbine à gaz,
- une température de fonctionnement de la turbine à gaz,
- la composition du combustible gazeux entrant (5),
- la composition de la première fraction de combustible (14) séparée
- la composition du second combustible (20) séparé,
- les émissions de CO,
- les émissions de NOx,
- la limite d'extinction par pauvreté,
- la pulsation basse fréquence,
- la flamme dans la chambre de combustion (4, 15).

7. Procédé de fonctionnement d'une turbine à gaz comportant au moins un compresseur (1), une chambre de combustion (4, 15), une turbine (7, 12) et un circuit de combustible,
dans lequel une première fraction de combustible (14) à concentration augmentée d'hydrocarbures à forte viscosité, qui présente une concentration plus élevée en hydrocarbures à forte viscosité qu'un combustible gazeux entrant (5), est séparée du combustible gazeux entrant (5) fournissant ainsi une seconde fraction de combustible restante (20) à concentration réduite en hydrocarbures à forte viscosité, qui présente une concentration moins élevée en hydrocarbures à forte viscosité que le combustible gazeux entrant (5),
dans lequel un flux de combustible gazeux comprenant la première fraction de combustible (14) est fourni dans l'au moins une chambre de combustion (4, 15) afin de réguler le comportement de combustion, **caractérisé en ce qu'**un mélange du combustible gazeux entrant (5) et de la seconde fraction de combustible (20) est fourni dans l'au moins une chambre de combustion (4, 15) de la turbine à gaz.

8. Procédé selon la revendication 7, **caractérisé en ce que** la totalité ou au moins une partie de la première fraction de combustible (14) est stockée dans un système de stockage (IV) pendant une première période de fonctionnement, et **en ce qu'**au moins une partie de la première fraction de combustible (14) stockée est fournie dans l'au moins une chambre de combustion (4, 15) afin de réguler le comportement de combustion pendant une seconde période de fonctionnement.

9. Procédé selon l'une des revendications 7 ou 8, **caractérisé en ce que** la première fraction de combustible (14) est mélangée au combustible gazeux entrant (5) et/ou à la seconde fraction de combustible (20) ou fournie directement dans la chambre de combustion (4, 15) afin de réguler un ou plusieurs des paramètres suivants :
- l'émission de CO
- l'émission de NOx
- le risque local de surchauffe et/ou de retour de flamme
- les pulsations engendrées par l'instabilité de la flamme et/ou l'extinction par pauvreté.

10. Procédé selon l'une des revendications 7 à 9, **caractérisé en ce que** dans une turbine à gaz à combustion séquentielle comprenant un compresseur (1), une première chambre de combustion (4), une première turbine (7), une seconde chambre de combustion (15) et une seconde turbine (12), la première fraction de combustible (14) est ajoutée dans la première chambre de combustion (4) et/ou la seconde chambre de combustion (15).

11. Procédé selon la revendication 10, **caractérisé en ce que** la première fraction de combustible (14) est ajoutée uniquement dans la première chambre de combustion (4) afin d'augmenter la stabilité de la flamme à faible charge lorsque la seconde chambre de combustion n'est pas en service, et/ou
**en ce que** la première fraction de combustible (14) est ajoutée uniquement dans la seconde chambre de combustion (15) pour augmenter la stabilité de la flamme à faible charge de la seconde chambre de combustion (15) afin de réduire l'émission de CO due aux basses températures, et/ou
**en ce que** la première fraction de combustible (14) est ajoutée uniquement dans la première chambre de combustion (4) pendant que seul le combustible de la seconde fraction de combustible (20) est utilisé pour actionner la seconde chambre de combustion (15) afin de réduire le risque de retour de flamme dans la seconde chambre de combustion.

12. Procédé selon l'une des revendications 7 à 11, **caractérisé en ce que** la première fraction de combustible (14) est ajoutée uniquement à certains brûleurs d'une chambre de combustion ou uniquement à certains des injecteurs d'un brûleur.

13. Procédé selon l'une des revendications 7 à 12, **caractérisé en ce que** la quantité de première fraction de combustible (14) ajoutée au flux de combustible d'un brûleur (4, 15) est régulée en fonction d'au moins un des paramètres suivants :
le débit massique total du combustible gazeux injecté dans la turbine à gaz,
la charge de la turbine à gaz ou la charge relative de la turbine à gaz,
la composition du combustible gazeux entrant (5),
la composition de la première fraction de combustible (14),
la composition de la seconde fraction de combustible (20),
une température de fonctionnement de la turbine à gaz,
les émissions de CO,
la teneur en hydrocarbures non brûlés dans les gaz d'échappement (13),
les émissions de NOx,
la limite d'extinction par pauvreté d'une chambre de combustion (4, 15),
la pulsation basse fréquence,
un signal de surveillance de la flamme,
un risque de retour de flamme.

14. Procédé selon l'une des revendications 7 à 12, **caractérisé en ce que** la première fraction de combustible (14) est séparée par au moins l'un des procédés suivants :
- un procédé de séparation par perméation utilisant des membranes (30),
- un procédé de séparation par adsorption
- un procédé de séparation par absorption
- un procédé d'adsorption à oscillation de pression ou de température (PSA/TSA),
- un procédé de séparation cryogénique.

15. Procédé selon la revendication 14, **caractérisé en ce qu'**un combustible entrant à plus de 50 % de méthane est fourni,
et **en ce que** la première fraction de combustible (14) est séparée par un procédé de séparation par perméation utilisant une membrane qui est perméable aux hydrocarbures à forte viscosité et permet à un flux principal de combustible riche en méthane de passer en tant que seconde fraction de combustible (20) avec une baisse de pression qui est inférieure à la baisse de pression de l'écoulement à travers la membrane (30),
ou **en ce que** la première fraction de combustible (14) est séparée par un procédé de séparation par adsorption dans lequel l'adsorbant est sélectif aux hydrocarbures à forte viscosité et permet au flux principal de combustible riche en méthane de passer en tant que seconde fraction de combustible (20).
